Europäisches Patentamt

European Patent Office

Office européen des brevets

(19)

(11) Numéro de publication : **0 110 779**
**B1**

(12)

# FASCICULE DE BREVET EUROPÉEN

(45) Date de publication du fascicule du brevet :
**27.05.87**

(51) Int. Cl.⁴ : **G 21 C 17/10**

(21) Numéro de dépôt : **83402263.4**

(22) Date de dépôt : **23.11.83**

(54) Procédé et dispositif de mesure de la puissance thermique locale dans un réacteur nucléaire.

(30) Priorité : **23.11.82 FR 8219598**

(43) Date de publication de la demande :
**13.06.84 Bulletin 84/24**

(45) Mention de la délivrance du brevet :
**27.05.87 Bulletin 87/22**

(84) Etats contractants désignés :
**BE DE GB IT SE**

(56) Documents cités :
**EP-A- 0 064 008**
**FR-A- 1 406 368**
**FR-A- 2 284 991**
**GB-A- 2 092 300**
**PROCEEDINGS OF THE SIXTH TRIPARTITE INSTRU-MENTATION CONFERENCE, avril 1960, papier 1.9, AECL-801, Chalk River (CA), A.C. LAPSLEY et al.: "Internal flux measurement", pages 55-60**

(73) Titulaire : **ELECTRICITE DE FRANCE Service National**
**2, rue Louis Murat**
**F-75008 Paris (FR)**

(72) Inventeur : **Guillery, Patrick**
**16 bis rue Diderot**
**F-78100 St Germain en Laye (FR)**
Inventeur : **Jacquot, Jean-Paul**
**234 rue Championnet**
**F-75018 Paris (FR)**

(74) Mandataire : **Fort, Jacques et al**
**CABINET PLASSERAUD 84, rue d'Amsterdam**
**F-75009 Paris (FR)**

EP 0 110 779 B1

Jouve, 18. rue St-Denis, 75001 Paris. France

## 0 110 779

**Description**

La présente invention concerne le domaine de la mesure de la puissance thermique dégagée localement par les crayons de combustible dans un réacteur nucléaire. Elle concerne plus particulièrement la mesure de la quantité de chaleur dégagée par unité de longueur des crayons, quantité qui varie suivant l'emplacement considéré le long du crayon de combustible et qui varie également d'un crayon de combustible à un autre.

On connaît déjà (FR-A-2 420 827) un procédé de mesure de la puissance thermique dégagée localement en un emplacement du cœur d'un réacteur nucléaire, procédé suivant lequel on mesure le signal électrique fourni par un couple thermoélectrique de détection ayant une première jonction portée à une température de référence, directement liée à la température du réfrigérant du réacteur audit emplacement lors du fonctionnement en régime permanent ou stabilisé, et une deuxième jonction placée de façon à être portée à la température d'un corps absorbant les rayonnements gamma audit emplacement.

On effectue ainsi une mesure par thermocouple différentiel soumis aux gradients de température existant entre une masse absorbant le rayonnement gamma, donc portée à une température qui dépend du flux gamma et de la puissance locale qui lui est directement liée, et un puits de chaleur à une température qui, en régime permanent stabilisé, est constante.

Mais, au cours des transitoires normaux ou accidentels du fonctionnement du réacteur, la température de la jonction de référence évolue beaucoup plus rapidement que la température de la jonction chaude. En conséquence, le signal de sortie obtenu provient de la superposition d'une composante représentant le flux gamma absorbé et d'une composante transitoire ayant pour origine les variations de température du réfrigérant du réacteur.

La présente invention vise notamment à écarter cette limitation. Dans ce but, elle propose un procédé suivant lequel on mesure également le signal électrique fourni par un couple thermoélectrique supplémentaire ayant une première jonction commune avec la première jonction du couple de détection et une deuxième jonction hors du réacteur maintenue à une température de référence ; et on corrige le signal électrique fourni par le couple thermoélectrique de détection à partir du signal fourni par le couple thermoélectrique supplémentaire en régime transitoire.

L'invention propose également un dispositif permettant de mettre en œuvre le procédé défini ci-dessus. Ce dispositif de mesure comprend un canal pénétrant dans le cœur du réacteur à partir de l'extérieur et contenant un corps absorbant les rayonnements gamma disposé à l'emplacement de mesure et associé à un thermocouple de mesure dont une première jonction est portée à une température représentative de celle du réfrigérant du réacteur et une seconde jonction est en contact thermique avec le corps absorbant les rayonnements. A cet ensemble, du genre couramment dénommé « thermomètre gamma », est associé un couple thermoélectrique supplémentaire ayant une première jonction commune avec celle du thermocouple de mesure et une seconde jonction située à l'extérieur du réacteur et portée à une température de référence. Les signaux de sortie des deux thermocouples sont appliqués à des moyens permettant de corriger automatiquement les indications fournies par le premier thermocouple en fonction des variations du signal de sortie du second thermocouple.

Les deux thermocouples peuvent être réalisés et reliés à l'extérieur de façon simple en inversant la disposition décrite, dans le cas particulier d'un thermomètre gamma mobile, dans le document FR-A-2 458 878.

Les moyens de correction peuvent avoir une constitution analogique ou numérique. Dans le second cas, ils peuvent en particulier comporter un microprocesseur. Dans les deux cas, ils déterminent la correction à partir de la fonction de transfert liant le signal d'erreur à la température et à sa loi de variation.

Cette fonction de transfert peut être déterminée in situ en munissant le dispositif de moyens de chauffage commandés, qui seront généralement constitués par une résistance électrique dont la puissance dissipée est communiquée à l'ensemble des jonctions. On a déjà proposé (FR-A-2 470 381) de munir un thermomètre gamma de tels moyens de chauffage, mais uniquement dans un but de calibrage en régime permanent. Suivant la présente invention au contraire, les moyens de chauffage associés aux thermocouples permettent non seulement de déterminer la sensibilité du thermocouple de mesure en régime permanent, mais aussi de déterminer la fonction de transfert des deux thermocouples, en modifiant la puissance dissipée par les moyens de chauffage de façon brusque et suivant une loi prédéterminée, par exemple en appliquant un échelon de puissance (ou une excitation d'un autre type : excitation pseudoaléatoire, excitation sinusoïdale).

De plus, en munissant le dispositif suivant l'invention de moyens de chauffage commandés, on peut surveiller séparément la jonction commune et la seconde jonction du premier thermocouple et déceler toute variation accidentelle de caractéristique. On peut enfin surveiller les transferts thermiques entre les jonctions et l'environnement et déceler ainsi ces variations, dues par exemple à une baisse de niveau de réfrigérant dans le réacteur.

L'invention est susceptible de nombreux modes de réalisation possibles. Le dispositif peut notamment comporter, dans un même canal pénétrant dans le cœur et parallèle aux crayons de combustible, plusieurs ensembles de mesure ayant chacun un thermocouple de mesure et un thermocouple supplémentaire. Le canal peut être constitué par une paroi balayée extérieurement par le réfrigérant, contre laquelle est plaqué le corps absorbant, de forme tubulaire, sauf en une zone au droit de laquelle est placée la seconde jonction du thermocouple de mesure.

Dans un autre mode de réalisation particulièrement utilisable dans les réacteurs à eau sous pression, le corps absorbant les rayonnements gamma est balayé sur sa surface externe par le réfrigérant et constitue le canal. La première jonction est alors placée dans une zone où la paroi du corps est localement amincie.

L'invention sera mieux comprise à la lecture de la description qui suit de modes particuliers de réalisation, donnés à titre d'exemples non limitatifs. La description se réfère aux dessins qui l'accompagnent, dans lesquels :

la Figure 1 est un schéma de principe montrant les parties matérielles d'un dispositif en coupe longitudinale, ainsi que les éléments essentiels des circuits électroniques associés,

la Figure 2 est une vue schématique en coupe suivant la ligne II-II de la Figure 1,

les Figures 3, 4 et 5 sont des organigrammes indiquant le mode d'estimation en ligne des constantes de temps $\tau_1$ et $\tau_2$ ; le calcul des températures et flux vrais ; et un sous-programme de calcul de $\varphi(t_i)$ ou $T(t_i)$,

la Figure 6 est un graphique montrant la loi de variation de température des jonctions en fonction du temps (courbes en trait plein) en réponse à l'application d'un échelon de puissance (courbe en tirets).

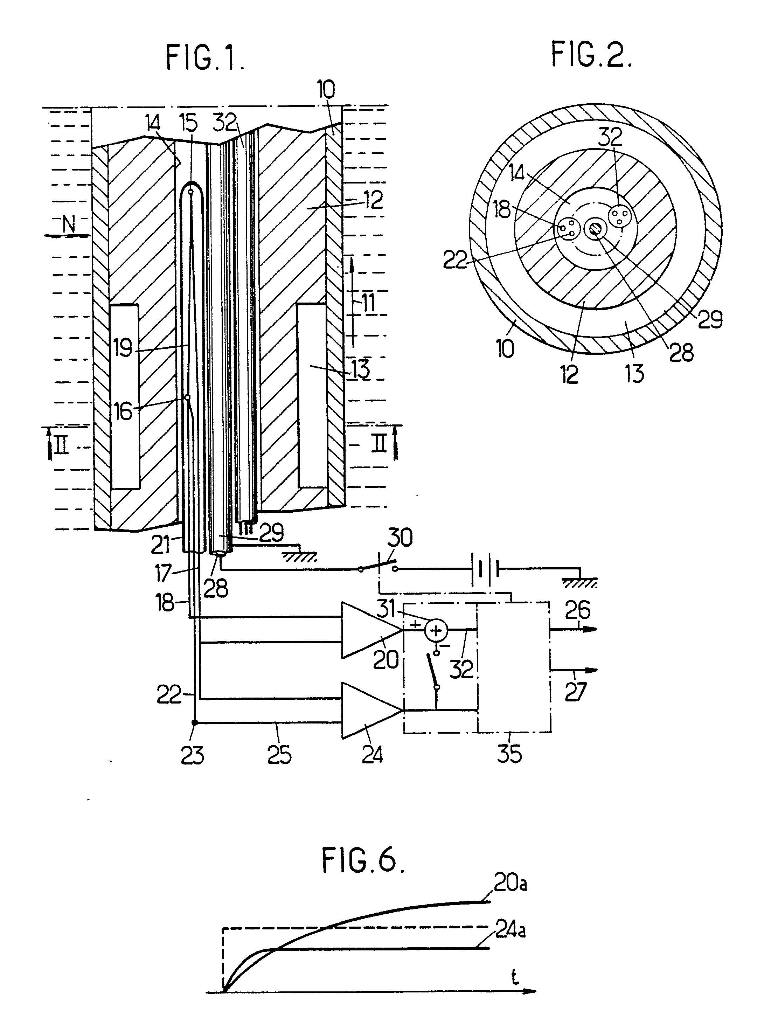

Le dispositif montré en figures 1 et 2, utilisable dans un réacteur à eau sous pression, comporte un tube vertical 10, dont la surface externe est balayée par la circulation 11 de réfrigérant, occupé par un corps cylindrique allongé 12 en matériau absorbant le rayonnement gamma (acier inoxydable par exemple). La chaleur dissipée dans le corps cylindrique 12 par absorption du rayonnement gamma s'écoule vers le tube 10 dont la température dépend fortement de celle du réfrigérant et plus faiblement du flux gamma. Le contact thermique entre le corps cylindrique 12 et le tube 10 doit être suffisamment bon pour ne pas se traduire par une différence de température appréciable entre la surface externe du corps et le tube.

Les Figures 1 et 2 montrent un évidement annulaire 13 ménagé dans le corps 12, constituant une brèche sur le trajet d'écoulement de la chaleur du corps 12 vers le tube 10. Par suite de cette brèche, l'écoulement thermique, radial dans la majeure partie de la longueur du corps 12, est sensiblement axial dans la partie médiane de la région rétrécie du corps. En mesurant la différence de température à l'intérieur du corps 12 entre un emplacement situé au milieu de la portion rétrécie et un emplacement situé hors de cette portion rétrécie, mais à proximité, on peut déterminer le flux thermique qui s'écoule vers le tube 10 et la puissance dissipée par unité de longueur.

La différence de température est mesurée à l'aide d'un thermocouple de mesure situé dans un trou central 14 du corps 12. Ce thermocouple comprend une première jonction (constituant la jonction froide) portée à une température voisine de celle du réfrigérant mais néanmoins légèrement représentative du flux gamma et une seconde jonction, constituant jonction chaude, située à mi-longueur de la région rétrécie. Ces jonctions peuvent être réalisées de la façon suivante : deux fils isolés en un métal constituant un premier composant d'un couple thermoélectrique (Chromel par exemple) 17 et 18 sont amenés depuis l'extérieur jusqu'aux jonctions 15 et 16. Un tronçon 19 d'un métal constituant l'autre composant du couple est relié par soudure aux fils 17 et 18, aux jonctions 15 et 16.

On constitue ainsi un thermocouple différentiel qui peut être relié, hors du réacteur, à un amplificateur différentiel 20. Les jonctions et les fils sont protégés par un doigt de gant 21 rempli d'un isolant électrique minéral pulvérulent résistant au rayonnement dans le cœur du réacteur.

En plus de ce dispositif, l'invention comporte un thermocouple supplémentaire constitué par le fil 17 (en chromel par exemple), le tronçon 19 (en alumel par exemple) et un fil de sortie supplémentaire 22 constitué du même matériau que le tronçon 19. Le thermocouple est complété par une jonction 23 portée à une température de référence fixe et connue. Cette jonction 23 pourra être située hors du réacteur. Un second amplificateur différentiel 24 relié au fil 17 et à un fil 25 de retour à partir de la jonction 23 fournit un signal de sortie représentatif de la température de la jonction 15, c'est-à-dire de la température du réfrigérant du réacteur en régime stabilisé de fonctionnement et du flux gamma à l'instant considéré.

Lorsque les conditions de fonctionnement du réacteur subissent une modification qui se traduit par un transitoire rapide de température, le thermocouple différentiel comportant les jonctions 15 et 16 fournit un signal de sortie qui est entaché d'un signal d'erreur. A condition de connaître la fonction de transfert entre température et signal d'erreur, ce signal d'erreur peut être calculé et utilisé pour corriger la mesure gamma. Cette opération peut être effectuée automatiquement dans un organe de calcul 35, comportant par exemple un microprocesseur et une mémoire morte de stockage de la fonction de transfert, soit sous forme d'une table de correspondance, soit sous forme d'un programme de calcul. On peut ainsi obtenir sur une sortie 26 un signal représentatif du flux gamma.

L'organe de calcul doit permettre de calculer la température vraie T du réfrigérant et le flux gamma vrai $\varphi$ à partir des signaux délivrés par les amplificateurs 20 et 24 : flux gamma brut $\varphi_b$ et température réfrigérant brut $T_b$.

Les relations liant $\varphi$, T, $\varphi_b$, $T_b$ sont de la forme :

3

**0 110 779**

$$\begin{pmatrix} \varphi_b(p) \\ T_b(p) \end{pmatrix} = \begin{pmatrix} H_{11}(p) & H_{12}(p) \\ H_{21}(p) & H_{22}(p) \end{pmatrix} \begin{pmatrix} \varphi(p) \\ T(p) \end{pmatrix} \tag{1}$$

ou :

$$\begin{pmatrix} \varphi(p) \\ T(p) \end{pmatrix} = \begin{pmatrix} H_{11}(p) & H_{12}(p) \\ H_{21}(p) & H_{22}(p) \end{pmatrix}^{-1} \begin{pmatrix} \varphi_b(p) \\ T_b(p) \end{pmatrix} \tag{2}$$

p désignant l'opérateur de Laplace.

Les fonctions $H_{ij}(p)$ sont par exemple de la forme :

$$H_{11}(p) = K \left[ \frac{A_1}{1 + \tau_1 p} - \frac{A_2}{1 - \tau_2 p} \right]$$

$$H_{21}(p) = K \frac{A_2}{1 + \tau_2 p}$$

$$H_{12}(p) = \left[ \frac{1}{1 + \tau_1 p} - \frac{1}{1 - \tau_2 p} \right]$$

$$H_{22}(p) = \frac{1}{1 + \tau_2 p}$$

où $\tau_1$ et $\tau_2$ sont les constantes de temps des parties 13 et 12 respectivement.

L'équation matricielle (2) peut aussi s'écrire sous la forme :

$$\begin{pmatrix} \varphi(p) \\ T(p) \end{pmatrix} = \begin{pmatrix} H'_{11}(p) & H'_{12}(p) \\ H'_{21}(p) & H'_{22}(p) \end{pmatrix} \cdot \begin{pmatrix} \varphi_b(p) \\ T_b(p) \end{pmatrix}$$

où les $H'_{ij}(p)$ sont calculés à partir de $H_{11}(p)$, $H_{12}(p)$, $H_{21}(p)$ et $H_{22}(p)$.

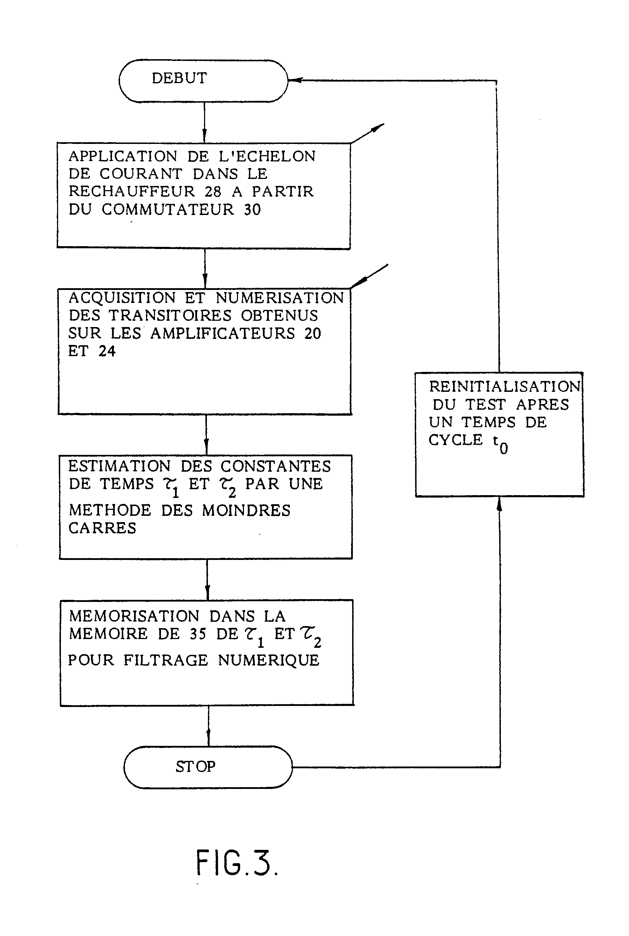

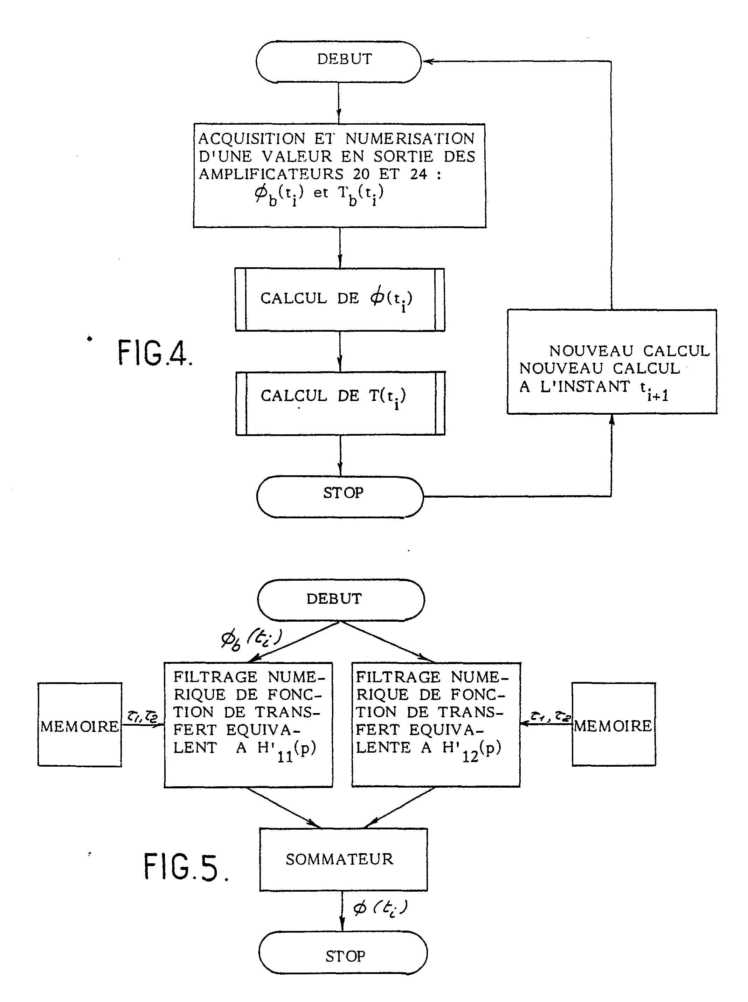

Une organisation possible du calcul est donnée par les organigrammes des figures 3, 4 et 5. La figure 4 donne le mode général de calcul des températures et flux vrais T et $\varphi$ à partir des valeurs brutes $\varphi_b$ et $T_b$ ; la figure 5 détaille le sous-programme de calcul de $\varphi$ (le sous-programme de calcul de T étant similaire). Enfin, la figure 3 donne un mode d'estimation en ligne des constantes de temps $\tau_1$ et $t_2$ qui interviennent dans le calcul de $\varphi$ et T.

L'organe de calcul 35 peut être prévu pour fournir également, sur une seconde sortie 27, un signal représentatif de la température du réfrigérant.

La détermination des fonctions de transfert $H'_{ij}$ peut s'effectuer alors que le dispositif est en place. Pour cela, il suffit de munir le dispositif de moyens de chauffage, représentés sur les figures 1 et 2 comme constitués par une résistance électrique 28 noyée dans une masse de matériau isolant électrique pulvérulent et enfermée dans une gaine de protection 29. Cette résistance est associée à un circuit d'alimentation schématisé sous forme d'une source de courant et d'un interrupteur 30.

La résistance de chauffage 28 permet de déterminer la sensibilité du thermocouple différentiel comprenant les jonctions 15 et 16, comme cela a déjà été exposé dans le document FR-A-2 470 381. Mais on peut également déterminer la fonction de transfert non seulement du thermocouple différentiel de mesure, mais aussi du thermocouple supplémentaire. Pour cela, on peut notamment appliquer à la résistance 28 un échelon de puissance, comme indiqué en tirets sur la figure 3. L'évolution des signaux fournis par les amplificateurs différentiels 20 et 24 a alors respectivement l'allure montrée en 20a et 24a sur la figure 6. L'analyse de ces courbes fournit la fonction de transfert des deux thermocouples. On peut également, en effectuant dans un circuit soustracteur 31 la différence des signaux provenant des amplificateurs 20 et 24, obtenir en 32 un signal représentatif de la température de la soudure chaude. Enfin, à condition de maintenir l'échelon de tension suffisamment longtemps pour arriver au régime stabilisé, on détermine la sensibilité des deux thermocouples au cours de la même opération.

Le dispositif qui vient d'être décrit permet de plus de détecter les variations des conditions de transfert thermique entre le corps 12 et l'environnement, c'est-à-dire le réfrigérant du réacteur. En cas de défaut de fonctionnement se traduisant par une baisse de la surface libre du réfrigérant qui amène celle-ci au-dessous de la jonction 15 (par exemple au niveau N sur la figure 1), la région du corps 12 située au-dessus du réfrigérant devient chaude par rapport à la région placée au-dessous. En conséquence, le signal fourni par l'amplificateur différentiel 20 s'inverse. La sensibilité d'un tel dispositif d'alarme en cas de baisse du niveau de réfrigérant peut être accrue en utilisant la résistance chauffante 28. En effet, la différence de température entre les deux jonctions 15 et 16 alors que le réfrigérant est au niveau N sera augmentée en cas d'apport de chaleur par la résistance 28, s'ajoutant à l'apport de chaleur par l'absorption de rayonnements gamma. De plus, la mesure du temps de réponse global ou des constantes de temps $\tau_1$ et $\tau_2$ permet de détecter que le niveau N est en dessous de la jonction 16. Enfin, la présence du thermocouple supplémentaire permet également de détecter une baisse de la surface libre du réfrigérant qui l'amène au-dessous du niveau de la jonction 16 par deux méthodes complémentaires : (a)

4

par l'amplitude de l'échauffement produit par un échelon de chaleur, (b) par la mesure de la constante de temps associée.

Toutes ces fonctions peuvent être simultanément remplies par l'organe de calcul 25, qui peut comporter, d'une part, l'organe de filtrage dynamique permettant de fournir une valeur corrigée du flux gamma et de la température du réfrigérant par calcul à partir de la fonction de transfert, d'autre part, des moyens de détermination automatique de la sensibilité des thermocouples et de leur fonction de transfert, éventuellement par commande à intervalles réguliers de l'application d'un échelon de tension, comme indiqué schématiquement en 31 sur la figure 1.

Le dispositif est susceptible de nombreuses variantes de réalisation. En particulier, plusieurs ensembles comprenant chacun un thermocouple de mesure et un thermocouple supplémentaire peuvent être placés dans le trou 14, de façon à effectuer des mesures à des niveaux différents. La gaine 32 d'un tel ensemble supplémentaire a été montrée schématiquement sur les figures 1 et 2.

**Revendications**

1. Procédé de mesure de la puissance thermique dégagée localement en un emplacement du cœur d'un réacteur nucléaire, suivant lequel on mesure le signal électrique fourni par un thermocouple de détection (15, 16) ayant une première jonction (15) portée à une température de référence, directement liée à la température du réfrigérant du réacteur audit emplacement lors du fonctionnement en régime permanent ou stabilisé du réacteur, et une deuxième jonction (16) placée de façon à être portée à la température d'un corps (12) absorbant les rayonnements gamma audit emplacement, caractérisé en ce qu'on mesure également le signal électrique fourni par un thermocouple supplémentaire ayant une première jonction (15) commune avec la première jonction du thermocouple de détection et une deuxième jonction (23) hors du réacteur maintenue à une température de référence, et en ce qu'on corrige le signal électrique fourni par le thermocouple de détection à partir du signal fourni par le thermocouple supplémentaire en régime transitoire.

2. Procédé selon la revendication 1, caractérisé en ce qu'on détermine la fonction de transfert de l'ensemble constitué par le thermocouple de détection et par ledit corps absorbant en analysant leur réponse dynamique à une modification brutale et déterminée de la puissance appliquée à un élément (28) de chauffage des jonctions pendant que le réacteur est en régime permanent.

3. Procédé selon la revendication 2, caractérisé en ce qu'on détermine également la fonction de transfert et la sensibilité du thermocouple supplémentaire à partir de la réponse dynamique de ce thermocouple supplémentaire à une modification brutale et déterminée de la puissance appliquée.

4. Procédé selon la revendication 3, caractérisé en ce que la variation brutale de la puissance appliquée est constituée par l'application d'un échelon de puissance thermique.

5. Procédé selon l'une quelconque des revendications précédentes, caractérisé en ce que l'on analyse les signaux de sortie des deux thermocouples pour détecter les modifications des conditions de transfert thermique avec le réfrigérant du réacteur, dues par exemple à une baisse de la surface libre du réfrigérant.

6. Dispositif de mesure de la puissance thermique dégagée localement en un emplacement du cœur d'un réacteur nucléaire, comprenant un canal ménagé dans le cœur du réacteur à partir de l'extérieur et contenant un corps (12) absorbant les rayonnements gamma, disposé à l'emplacement de mesure et associé à un thermocouple de mesure dont une première jonction (15) est placée de façon à être portée à une température représentative pour l'essentiel de celle du réfrigérant du réacteur et légèrement affectée par le flux gamma et une seconde jonction (16) est placée pour être portée à une température représentative de celle du corps absorbant les rayonnements, caractérisé en ce qu'il comprend un thermocouple supplémentaire ayant une première jonction (15) commune avec celle du thermocouple de mesure et une seconde jonction (23) portée à une température de référence, les signaux de sortie des deux thermocouples étant appliqués à des moyens (20, 24, 35) permettant de corriger automatiquement les indications fournies par le thermocouple de mesure en fonction des variations du signal de sortie du thermocouple supplémentaire.

**Claims**

1. Measurement process for measuring the thermal power locally generated at a location in a nuclear reactor, comprising measuring the electric signal delivered by a thermocouple for detection (15, 16) having a first junction (15) maintained at a reference temperature, directly related to the reactor coolant temperature at said location during reactor operation under steady or stabilized conditions, and a second junction (16) arranged to be brought to the temperature of a gamma radiation absorbing body (12) at said location, characterized by that it further comprises measuring the electric signal delivered by an additional thermocouple having a first junction (15) common with the first junction of the thermocouple for detection and a second junction (23) outside of the reactor and maintained at a reference temperature, and correcting the electrical signal delivered by the thermocouple for detection by the signal delivered by

5

**0 110 779**

the additional thermocouple under transitory operating conditions of the reactor.

2. Process according to claim 1, characterized in that it further comprises determining the transfer function of the unit consisting in the thermocouple for detection and the absorbing body by analyzing their dynamic response to an abrupt and predetermined modification of the power supplied to a heating element (28) for heating the junctions, under steady operating conditions of the reactor.

3. Process according to claim 2, characterized in that it further comprises determining the transfer function and the sensitivity of the additional thermocouple from the dynamic response of said additional thermocouple to an abrupt and predetermined modification of the supplied power.

4. Process according to claim 3, characterized in that the abrupt variation of the supplied power consists in the application of a thermal power step.

5. Process according to any one of the preceding claims, characterized in that it comprises analyzing the output signals of the two thermocouples for detecting the modification in the thermal, transfer condition with the reactor coolant, due for example to a drop in the coolant free surface.

6. Measuring device for the measuring of the thermal power locally generated at a location in a nuclear reactor comprising a channel arranged within the core of the reactor from outside and containing a gamma radiation absorbing body (12), disposed at the location of the measurement and combined with a thermocouple for said measurement having a first junction (15) arranged to be brought to a temperature for the most representating the reactor coolant temperature and slightly affected by the gamma flux and a second junction (16) disposed to be brought to a temperature representative of the radiation absorbing body, characterized in that it comprises an additional thermocouple having a first junction (15) common with the junction of the thermocouple for measurement and a second junction (23) brought to a reference temperature, the output signals of the two thermocouples being delivered to correcting means (20, 24, 35) for automatic correction of the indications supplied by the thermocouple for measurement according to the output signal variations of the additional thermocouple.


**Patentansprüche**

1. Verfahren zur Messung der an einer Stelle des Kerns eines Kernreaktors örtlich freigesetzten Wärmeleistung, wonach ein elektrisches Signal gemessen wird, das von einem Abfühlthermoelement (15, 16) geliefert wird, das folgendes aufweist : eine erste Verbindungsstelle (15), die auf eine Bezugstemperatur gebracht wird, die mit der Temperatur des Kühlmittels des Reaktors an der genannten Stelle während des ständigen oder stabilisierten Betriebs des Reaktors unmittelbar verbunden ist, und eine zweite Verbindungsstelle (16), die derart angeordnet ist, daß sie auf die Temperatur eines Körpers gebracht wird, der die Gammastrahlungen an der genannten Stelle absorbiert, dadurch gekennzeichnet, daß man auch das elektrische Signal mißt, das von einem zusätzlichen Thermoelement geliefert wird, das folgendes aufweist : eine mit der ersten Verbindungsstelle des Abfühlthermoelements gemeinsame erste Verbindungsstelle (15) und eine außerhalb des Reaktors befindliche zweite Verbindungsstelle (23), die auf einer Bezugstemperatur gehalten wird, und daß man ausgehend von dem durch das zusätzliche Thermoelement im Übergangsbereich gelieferten Signal das vom Abfühlthermoelement gelieferte elektrische Signal korrigiert.

2. Verfahren nach Anspruch 1, dadurch gekennzeichnet, daß man die Übertragungsfunktion der durch das Abfühlthermoelement und den absorbierenden Körper gebildeten Anordnung bestimmt durch Analysieren von deren dynamischem Ansprechen auf eine plötzliche und gegebene Änderung der auf ein Heizelement (28) der Verbindungsstelle ausgeübten Leistung, während sich der Reaktor im Dauerbetrieb befindet.

3. Verfahren nach Anspruch 2, dadurch gekennzeichnet, daß man auch die Übertragungsfunktion und die Empfindlichkeit des zusätzlichen Thermoelements bestimmt ausgehend vom dynamischen Ansprechen dieses zusätzlichen Thermoelements auf eine plötzliche und gegebene Änderungen der ausgeübten Leistung.

4. Verfahren nach Anspruch 3, dadurch gekennzeichnet, daß die plötzliche Änderung der ausgeübten Leistung durch die Ausübung eines Wärmeleistungssprungs gebildet wird.

5. Verfahren nach einem der vorhergehenden Ansprüche, dadurch gekennzeichnet, daß man die Ausgangssignale der beiden Thermoelemente analysiert, um die Änderungen der Wärmeübertragungsbedingungen mit dem Kühlmittel des Reaktors zu erfassen, die z. B. durch ein Absinken der freien Oberfläche des Kühlmittels bedingt sind.

6. Vorrichtung zur Messung der an einer Stelle des Kerns eines Kernreaktors örtlich freigesetzten Wärmeleistung, enthaltend einen Kanal, der ausgehend von der Außenseite im Kern des Reaktors ausgebildet ist und einen die Gammastrahlungen absorbierenden Körper (12) enthält, der am Meßort angeordnet und mit einem Meßthermoelement verbunden ist, von dem eine erste Verbindungsstelle (15) derart angeordnet ist, daß sie auf eine Temperatur gebracht wird, die im wesentlichen repräsentativ für diejenige des Kühlmittels des Reaktors ist und die vom Gammastrahlenfluß leicht beeinflußt wird, und von dem eine zweite Verbindungsstelle (16) derart angeordnet ist, daß sie auf eine Temperatur gebracht wird, die repräsentativ für diejenige des die Strahlungen absorbierenden Körpers ist, dadurch gekennzeichnet, daß sie folgendes aufweist : ein zusätzliches Thermoelement mit einer ersten Verbindungsstelle (15), die

6

mit derjenigen des Meßthermoelements gemeinsam ist, und eine zweite Verbindungsstelle (23), die auf eine Bezugstemperator gebracht ist, wobei die Ausgangssignale der beiden Thermoelemente auf Mittel (20, 24, 35) gegeben werden, die ein automatisches Korrigieren der Angaben gestatten, die durch das Meßthermoelement in Abhängigkeit von den Änderungen des Ausgangssignals des zusätzlichen Thermoelementes geliefert werden.

# FIG.1.

# FIG.2.

# FIG.6.

```
                    ┌─────────────┐
                    │    DEBUT    │◄──────────────────┐
                    └─────────────┘                   │
                           │                          │
                           ▼                          │
        ┌──────────────────────────┐                 │
        │ APPLICATION DE L'ECHELON  │/                │
        │ DE COURANT DANS LE        │                 │
        │ RECHAUFFEUR 28 A PARTIR   │                 │
        │ DU COMMUTATEUR 30         │                 │
        └──────────────────────────┘                 │
                           │                          │
                           ▼                          │
        ┌──────────────────────────┐/                │
        │ ACQUISITION ET NUMERISATION                 │
        │ DES TRANSITOIRES OBTENUS  │                 │
        │ SUR LES AMPLIFICATEURS 20 │    ┌────────────────────┐
        │ ET 24                     │    │ REINITIALISATION   │
        │                           │    │ DU TEST APRES      │
        └──────────────────────────┘    │ UN TEMPS DE        │
                           │             │ CYCLE t_0          │
                           ▼             └────────────────────┘
        ┌──────────────────────────┐        ▲
        │ ESTIMATION DES CONSTANTES │        │
        │ DE TEMPS τ_1 ET τ_2 PAR UNE│       │
        │ METHODE DES MOINDRES      │        │
        │ CARRES                    │        │
        └──────────────────────────┘        │
                           │                 │
                           ▼                 │
        ┌──────────────────────────┐        │
        │ MEMORISATION DANS LA      │        │
        │ MEMOIRE DE 35 DE τ_1 ET τ_2│       │
        │ POUR FILTRAGE NUMERIQUE   │        │
        └──────────────────────────┘        │
                           │                 │
                           ▼                 │
                    ┌─────────────┐          │
                    │    STOP     │──────────┘
                    └─────────────┘
```

DEBUT

APPLICATION DE L'ECHELON DE COURANT DANS LE RECHAUFFEUR 28 A PARTIR DU COMMUTATEUR 30

ACQUISITION ET NUMERISATION DES TRANSITOIRES OBTENUS SUR LES AMPLIFICATEURS 20 ET 24

ESTIMATION DES CONSTANTES DE TEMPS $\tau_1$ ET $\tau_2$ PAR UNE METHODE DES MOINDRES CARRES

MEMORISATION DANS LA MEMOIRE DE 35 DE $\tau_1$ ET $\tau_2$ POUR FILTRAGE NUMERIQUE

STOP

REINITIALISATION DU TEST APRES UN TEMPS DE CYCLE $t_0$

# FIG.3.

FIG.4.

FIG.5.

3